# FASCICULE DE BREVET EUROPEEN

(11) **EP 3 575 148 B1**
(45) Date de publication et mention de la délivrance du brevet: **16.08.2023**
(21) Numéro de dépôt: 19177597.2
(22) Date de dépôt: 31.05.2019
(51) Int. Cl.: B60Q 3/43, B29C 48/19, B29C 48/12, B29C 48/07, B61D 37/00, B61D 29/00, B29L 31/00, B29L 7/00, B29K 21/00, B29K 69/00

(54) **ÉLÉMENT D'ÉCLAIRAGE POUR L'AMÉNAGEMENT INTÉRIEUR D'UN VÉHICULE FERROVIAIRE ET VÉHICULE FERROVIAIRE**
BELEUCHTUNGSELEMENT ZUR INNENAUSSTATTUNG EINES SCHIENENFAHRZEUGS UND SCHIENENFAHRZEUG
LIGHTING ELEMENT FOR ARRANGING THE INSIDE OF A RAIL VEHICLE AND RAIL VEHICLE

(30) Priorité: 01.06.2018 FR 1854777
(43) Date de publication de la demande: 04.12.2019
(73) Titulaire: ALSTOM Transport Technologies, 93400 Saint-Ouen (FR)
(72) Inventeur: LANGLOIS, Francis, 59310 FAUMONT (FR); LEBER, Yohan, 59300 VALENCIENNES (FR)
(74) Mandataire: Lavoix

(56) Documents cités:
- WO-A1-2013/012046
- US-A- 5 441 326
- US-A1- 2005 213 342
- US-A1- 2006 072 329
- US-A1- 2012 262 916
- US-A1- 2016 061 406
- US-A1- 2017 023 192

## Description

La présente invention concerne un profilé pour l'aménagement intérieur d'un véhicule ferroviaire.

En aménagement intérieur ferroviaire, notamment des véhicules comprenant au moins une voiture de transport de passagers, la voiture comporte des sièges au-dessus desquels sont généralement installés des modules de porte-bagages. Les porte-bagages sont composés d'une structure porteuse d'un plateau. Cette structure porteuse est recouverte dans sa partie inférieure d'un capot, généralement équipé d'un luminaire.

De façon connue, les capots sont constitués d'assemblage de profilés en aluminium avec des profilés en polycarbonate. Les pièces composant les capots sont assemblées entre elles par de la visserie.

Ces capots sont généralement articulés sous la structure du module de porte-bagages grâce à une charnière, réalisée en profilés d'aluminium, dont la mise au point peut être sensible.

L'articulation des capots, de par la conception de la charnière est souvent limitée, limitant ainsi l'accès pour montage et maintenance aux équipements placés sous le module de porte-bagages.

Il existe donc un besoin de simplifier le capot de module de porte-bagages, ainsi que réduire les temps d'assemblage et d'accès pour la maintenance des équipements sous le module de porte-bagages.

US 2005/0213342 A1 décrit un profilé pour l'aménagement intérieur d'un véhicule ferroviaire comprenant :
- un substrat rigide s'étendant suivant une direction longitudinale et présentant deux bords longitudinaux opposés, ledit substrat rigide comprenant au moins une première partie opaque et au moins une seconde partie transparente ou translucide, chaque première et seconde partie s'étendant suivant la direction longitudinale, et
- un revêtement élastomère thermoplastique extrudé.

A cet effet, l'invention propose un élément d'éclairage comprenant un profilé pour l'aménagement intérieur d'un véhicule ferroviaire, le profilé étant réalisé par co-extrusion en une seule pièce et comprenant :
- un substrat rigide s'étendant suivant une direction longitudinale et présentant deux bords longitudinaux opposés, ledit substrat rigide étant réalisé en polycarbonate et comprenant au moins une première partie opaque et au moins une seconde partie transparente ou translucide, chaque première et seconde partie s'étendant suivant la direction longitudinale, et
- un revêtement élastomère thermoplastique extrudé conjointement au substrat rigide sur au moins une partie de l'un des bords longitudinaux dudit substrat rigide, l'élément d'éclairage comprenant un corps formé par le substrat rigide présentant une forme tubulaire suivant la direction longitudinale définissant un intérieur du corps et un extérieur du corps, le substrat rigide délimitant une surface de fixation d'une barrette de diodes électroluminescentes, cette surface de fixation étant située à l'extérieur du corps de l'élément d'éclairage, l'élément d'éclairage étant pourvu de découpes ménagées dans la surface de fixation de la barrette de diodes électroluminescentes de manière à ce que les diodes électroluminescentes soient orientées vers l'intérieur du corps lorsque les diodes sont insérées dans les découpes et que la barrette de diodes électroluminescentes est fixée.

Selon un mode de réalisation particulier de l'invention, le profilé forme un capot adapté pour être fixé à un module de porte-bagages.

Un élément d'éclairage selon l'invention peut comprendre une pluralité de clips de fixation de la barrette à diodes électroluminescentes.

L'invention concerne, en outre, un véhicule ferroviaire comprenant un élément d'éclairage tel que défini précédemment.

Selon un mode de réalisation particulier de l'invention, le véhicule ferroviaire comprend un module de porte-bagages, le profilé étant fixé au module de porte-bagages, le profilé étant mobile en rotation autour d'un axe du module de porte-bagages entre une première position extrême dite position de fonctionnement et une deuxième position extrême dite position de maintenance, et dans lequel l'angle formé par le bord longitudinal du profilé opposé au bord longitudinal comprenant le revêtement élastomère thermoplastique entre la position de fonctionnement du profilé et sa position de maintenance est supérieur ou égal à 95°.

L'invention sera mieux comprise à la lumière de la description qui va suivre, donnée uniquement à titre d'exemple et faite en se référant aux figures annexées, parmi lesquelles :
- la figure 1 est une vue en perspective d'un profilé selon l'invention,
- la figure 2 est une vue en perspective éclatée d'un élément d'éclairage comprenant un profilé selon l'invention
- la figure 3 est une vue représentant un module de porte-bagages comprenant le profilé des figures 1 et 2 en position de fonctionnement.
- la figure 4 est une vue représentant un module de porte-bagages comprenant le profilé des figures 1 et 2 en position de maintenance.

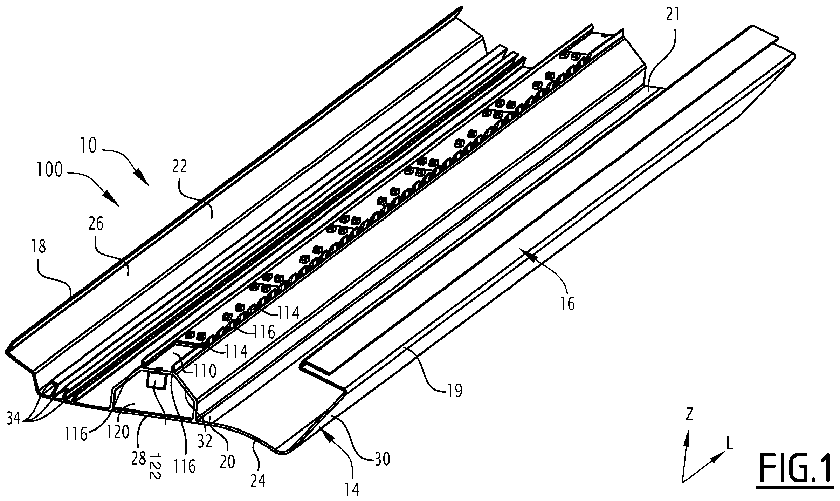

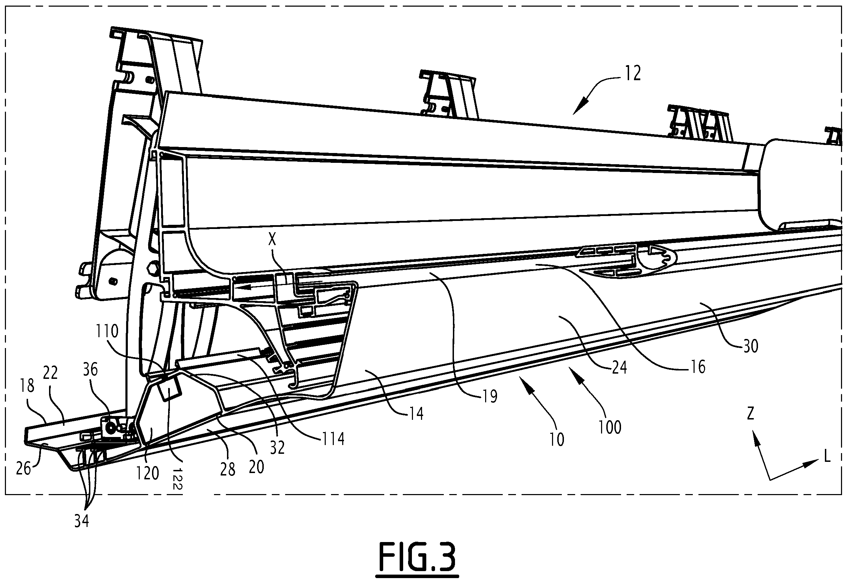

On a représenté, sur la figure 1, un profilé 10 pour l'aménagement intérieur d'un véhicule ferroviaire. Selon un mode de réalisation, le véhicule ferroviaire comprend au moins une voiture de transport de passagers, la voiture comportant des sièges au-dessus desquels sont installés des modules de porte-bagages 12 (Figure 3).

Selon ce mode de réalisation, le profilé 10 selon l'invention est particulièrement adapté pour être fixé sur un de ces modules de porte-bagages 12. Il forme alors un capot 10 du module de porte-bagages 12. Selon des variantes, le profilé 10 est adapté pour s'intégrer à d'autres équipements intérieurs du véhicule ferroviaire, par exemple à un panneau au-dessus d'une porte, un bandeau d'habillage, un panneau de plafond, ou tout autre équipement possible.

Dans l'exemple décrit, le profilé 10 présente une forme allongée, s'étend suivant une direction longitudinale L et s'élève suivant une direction d'élévation Z.

Par la suite, les termes « supérieur », « inférieur », « haut » et «bas » sont définis par rapport à la direction d'élévation Z. Une longueur est définie par rapport à la direction longitudinale L.

Le profilé 10 est réalisé par co-extrusion en une seule pièce.

Le profilé 10 comprend un substrat rigide 14 et un revêtement élastomère thermoplastique 16 extrudé conjointement au substrat rigide 14.

Le substrat rigide 14 est réalisé en polycarbonate.

Le substrat rigide 14 présente deux bords longitudinaux 18, 19 opposés et deux extrémités longitudinales 20, 21 opposées délimitant une face supérieure 22 et une face inférieure 24 du substrat rigide 14.

De préférence, chaque bord longitudinal 18, 19 est droit sur toute la longueur du substrat rigide 14.

Avantageusement, la face inférieure 24 du substrat rigide 14 est dépourvue de relief, c'est-à-dire que rien ne dépasse de cette face.

Le substrat rigide 14 comprend au moins une première partie opaque 26 et au moins une seconde partie transparente ou translucide 28, 30.

Selon l'exemple de la figure 1, le substrat rigide 14 comprend une première partie opaque 26 et deux deuxièmes parties transparentes ou translucides 28, 30. La première partie opaque 26 est localement repliée sur toute sa longueur pour former une partie de tube 32.

Ici et dans la suite, les termes « tube » et « tubulaire » sont à entendre selon toutes leurs acceptions possibles et ne sont pas limités à la forme cylindrique de révolution.

La face supérieure 22 comprend typiquement des saillies 34 allongées de positionnement d'éléments de fixation primaires 36 et d'un élément de fixation secondaire 38. Les éléments de fixation primaires 36 permettent de fixer chaque extrémité longitudinale 20, 21 du profilé 10 au module de porte-bagages 12.

L'élément de fixation secondaire 38 est par exemple un crochet 40 articulé par un organe élastique 42.

L'une des deux deuxièmes parties transparentes ou translucides 28 est disposée en regard de la partie de tube 32 formée par le pli du substrat rigide 14 pour former un tube.

De préférence, ladite deuxième partie 28 présente sensiblement une forme de rectangle.

L'autre des deux deuxièmes parties transparentes ou translucides 30 est située le long d'un bord longitudinal 19 du profilé 10.

De préférence, ladite deuxième partie transparente ou translucide 30 présente sensiblement une forme de rectangle.

De préférence, un angle compris entre 90° et 140° est ménagé entre la première partie opaque 26 et ladite deuxième partie transparente ou translucide 30 le long du profilé 10 de sorte que le profilé 10 ait une forme adaptée au module de porte-bagages 12.

Le revêtement élastomère thermoplastique 16 est destiné à assurer la jonction entre le profilé 10 et le module de porte-bagages 12.

Le revêtement élastomère thermoplastique 16 est situé sur au moins une partie de l'un des bords longitudinaux 19, 20 dudit substrat rigide 14. Sur l'exemple représenté, le revêtement élastomère thermoplastique 16 est situé sur l'ensemble de l'un des bords longitudinaux 19, 20 du substrat rigide 14.

Plus particulièrement, le revêtement élastomère thermoplastique 16 est situé sur l'ensemble du bord longitudinal 19 délimité par l'autre des deux deuxièmes parties transparentes ou translucides 30.

Le revêtement élastomère thermoplastique 16 forme typiquement un angle avec la face supérieure 22 de l'autre des deux deuxièmes parties 30 compris entre 30° et 90° et il est replié sur lui-même pour présenter une forme adaptée au module de porte-bagages 12 et assurer une fonction de charnière du profilé 10 autour d'un axe X du module de porte-bagages 12.

Le revêtement élastomère thermoplastique 14 comprend par exemple du caoutchouc **EPDM** (éthylène-propylène-diène monomère) compact, ou du silicone compact.

Le profilé 10 selon l'invention est donc simple à réaliser.

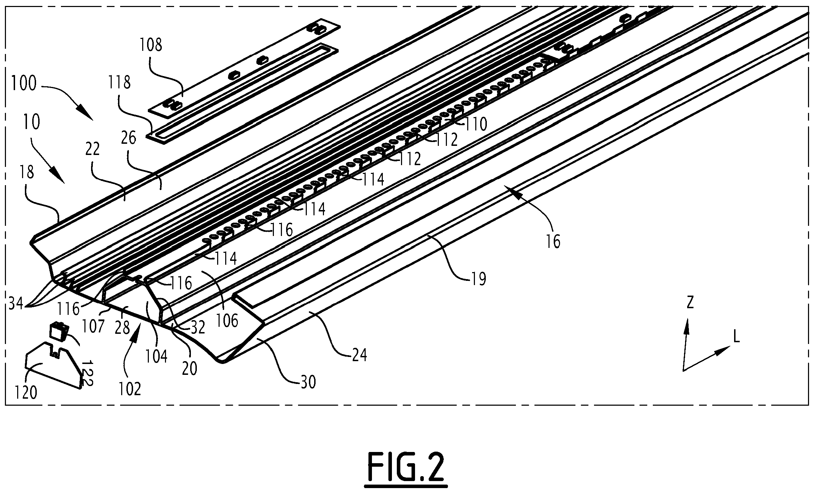

On décrit maintenant un élément d'éclairage 100 comprenant un profilé 10 selon l'invention. Sur les Figures 1 et 2, l'élément d'éclairage 100 comprend un corps 102 présentant une forme tubulaire suivant la direction longitudinale L. Le corps 102 est formé par le substrat rigide 14, plus particulièrement par la première partie opaque 26 localement repliée sur toute sa longueur pour former une partie de tube 32, et la deuxième partie transparente ou translucide 28 disposée en regard de la partie de tube 32.

Le corps 102 définit un intérieur 104, un extérieur 106 et deux extrémités longitudinales 107 de ce corps 102.

Le corps 102 présente une section transversale de toute forme techniquement réalisable. Selon l'exemple représenté, le corps 102 présente une section transversale de forme semi-octogonale.

L'élément d'éclairage 100 est adapté pour recevoir au moins une barrette de diodes électroluminescentes (DEL) 108.

Le substrat rigide 14 délimite une surface de fixation 110 de la barrette de DEL 108. Cette surface de fixation 110 est située à l'extérieur 106 du corps 102.

L'élément d'éclairage 100 est pourvu de découpes 112 ménagées dans la surface de fixation 110 de la barrette à DEL 108. Ainsi, lorsque la barrette 108 est fixée, les DEL sont orientées vers l'intérieur 104 du corps 102.

La deuxième partie transparente ou translucide 28 est alors située en vis-à-vis des DEL et laisse passer la lumière de ces DEL.

L'élément d'éclairage 100 comprend en outre une pluralité de clips de fixation 114 de la barrette de DEL 108. Selon l'exemple de la Figure 2, les clips de fixation 114 sont des saillies du substrat rigide 14 disposées de part et d'autre de la surface de fixation 110 de la barrette de DEL 108. Ces clips de fixation 114 s'étendent longitudinalement et suivant la direction d'élévation Z. Chaque clip de fixation 114 comprend un organe de verrouillage 116 de la barrette de DEL 108 à la surface de fixation 110 associée, par exemple une dent de verrouillage 116.

La fixation entre la barrette de DEL 108 et l'élément d'éclairage 100 est de préférence maintenue étanche par un joint d'étanchéité 118.

Pour assembler l'élément d'éclairage 100, un profilé 10 selon l'invention est fourni. Des barrettes de DEL 108 pourvues d'un joint d'étanchéité 118 sont placées sur la surface de fixation 110 du substrat rigide 14, les DEL étant insérées dans les découpes 112 ménagées à cet effet et orientées vers l'intérieur 104 du corps 102.

Les barrettes de DEL 108 sont fixées par encliquetage au moyen des clips de fixation 114 et sont maintenues par les dents de verrouillage 116.

Deux plaques d'obturation latérale 120 sont fixées de part et d'autre du corps 102 suivant la direction longitudinale L pour obturer les extrémités longitudinales 107 du corps 102. De préférence, les plaques d'obturation 120 sont fixées par encliquetage à l'aide d'un support injecté 122. Avantageusement, chaque plaque d'obturation 120 est réalisée en polycarbonate transparent ou translucide, et est produite par découpe d'une plaque en polycarbonate. Elle peut être également réalisée en métal ou alliage léger afin d'être avantageusement opaque, et est produite par découpe d'une plaque du dit matériau.

L'assemblage d'un élément d'éclairage 100 selon l'invention nécessite donc peu de pièces, est simple et rapide.

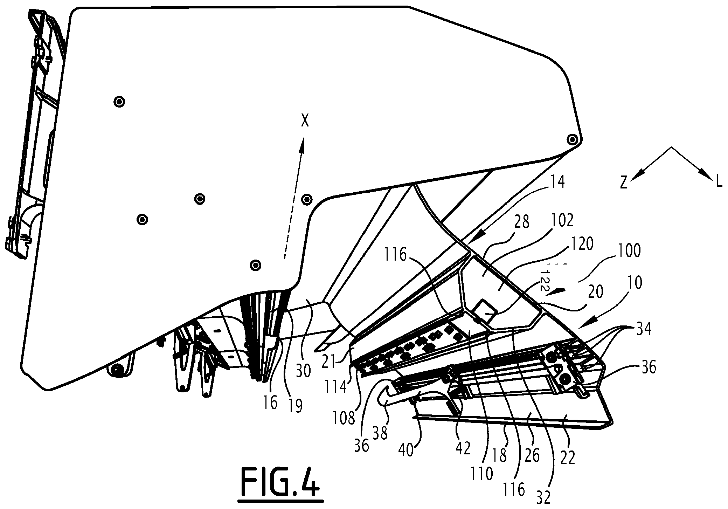

Sur les Figures 3 et 4, on a représenté un module de porte-bagages 12 comprenant un profilé 10 selon l'invention.

Le profilé 10 est assemblé au module de porte-bagages 12 par le revêtement élastomère thermoplastique 16 pour former une charnière, puis est rabattu et fixé de façon connue par les éléments de fixation primaires 36 et secondaire 38.

Une fois assemblé, le profilé 10 est mobile en rotation autour de l'axe X du module de porte-bagages 12 entre une première position extrême dite position de fonctionnement (représentée sur la Figure 3) et une deuxième position extrême dite position de maintenance (représentée sur la Figure 4).

L'angle formé par le bord longitudinal 18 du profilé 10 opposé au bord longitudinal 19 comprenant le revêtement élastomère thermoplastique 16 entre la position de fonctionnement du profilé et sa position de maintenance est par exemple supérieur ou égal à 95°.

Dans la position de maintenance du profilé 10, le montage et la maintenance des équipements du module de porte-bagages 12 sont alors aisés et nécessitent peu de temps grâce à la grande amplitude d'ouverture de cette charnière ainsi formée.

Un même profilé 10 regroupe donc les fonctions de capotage du module de porte-bagages 12, d'éclairage, de fixation du profilé 10 au module de porte-bagages 12, et d'articulation du profilé 10 autour d'un axe par rapport au module de porte-bagages 12.

En outre, un tel profilé 10 est léger de par le matériau dont il est constitué.

## Revendications

1. Elément d'éclairage (100) comportant un profilé (10) pour l'aménagement intérieur d'un véhicule ferroviaire, le profilé (10) étant réalisé par co-extrusion en une seule pièce et comprenant :
- un substrat rigide (14) s'étendant suivant une direction longitudinale (L) et présentant deux bords longitudinaux (18, 19) opposés, ledit substrat rigide (14) étant réalisé en polycarbonate et comprenant au moins une première partie opaque (26) et au moins une seconde partie transparente ou translucide (28, 30), chaque première (26) et seconde partie (28, 30) s'étendant suivant la direction longitudinale (L), et
- un revêtement élastomère thermoplastique (16) extrudé conjointement au substrat rigide (14) sur au moins une partie de l'un des bords longitudinaux (19) dudit substrat rigide (14),
l'élément d'éclairage (100) comprenant un corps (102) formé par le substrat rigide (14) présentant une forme tubulaire suivant la direction longitudinale (L) définissant un intérieur (104) du corps (102) et un extérieur (106) du corps (102), le substrat rigide (14) délimitant une surface de fixation (110) d'une barrette de diodes électroluminescentes (108), cette surface de fixation (110) étant située à l'extérieur (106) du corps (102) de l'élément d'éclairage (100),
l'élément d'éclairage (100) étant pourvu de découpes (112) ménagées dans la surface de fixation (110) de la barrette de diodes électroluminescentes (108) de manière à ce que les diodes électroluminescentes soient orientées vers l'intérieur (104) du corps (102) lorsque les diodes sont insérées dans les découpes et que la barrette de diodes électroluminescentes (108) est fixée.

2. Elément d'éclairage (100) selon la revendication 1, dans lequel le profilé (10) forme un capot adapté pour être fixé à un module de porte-bagages (12).

3. Elément d'éclairage (100) selon l'une quelconque des revendications 1 ou 2, comprenant une pluralité de clips de fixation (114) de la barrette à diodes électroluminescentes (108).

4. Véhicule ferroviaire comprenant un élément d'éclairage (100) selon l'une quelconque des revendications précédentes.

5. Véhicule ferroviaire selon la revendication 4 comprenant un module de porte-bagages (12), le profilé (10) étant fixé au module de porte-bagages (12), le profilé (10) étant mobile en rotation autour d'un axe (X) du module de porte-bagages (12) entre une première position extrême dite position de fonctionnement et une deuxième position extrême dite position de maintenance, et dans lequel l'angle (X) formé par le bord longitudinal (18) du profilé (10) opposé au bord longitudinal (19) comprenant le revêtement élastomère thermoplastique (16) entre la position de fonctionnement du profilé (10) et sa position de maintenance est supérieur ou égal à 95°.

## Patentansprüche

1. - Beleuchtungselement (100), umfassend ein Profil (10) für die Innenausstattung eines Schienenfahrzeugs, wobei das Profil (10) durch Coextrusion in einem Stück gefertigt ist und umfassend:
- ein starres Substrat (14), das sich entlang einer Längsrichtung (L) erstreckt und zwei gegenüberliegende Längsränder (18, 19) aufweist, wobei das starre Substrat (14) hergestellt ist aus Polycarbonat und mindestens einen ersten opaken Abschnitt (26) und mindestens einen zweiten transparenten oder transluzenten Abschnitt (28, 30) umfasst, wobei sich jeder erste (26) und zweite Abschnitt (28, 30) entlang der Längsrichtung (L) erstreckt, und
- eine thermoplastische Elastomerbeschichtung (16), die zusammen mit dem starren Substrat (14) auf mindestens einen Abschnitt eines der Längsränder (19) des starren Substrats (14) extrudiert wird, das Beleuchtungselement (100) umfassend einen Körper (102), der durch das starre Substrat (14) gebildet ist, das eine röhrenförmige Form entlang der Längsrichtung (L) aufweist, die eine Innenseite (104) des Körpers (102) und eine Außenseite (106) des Körpers (102) definiert, wobei das starre Substrat (14) eine Befestigungsfläche (110) einer Leuchtdiodenleiste (108) begrenzt, wobei sich diese Befestigungsfläche (110) an der Außenseite (106) des Körpers (102) des Beleuchtungselements (100) befindet,
wobei das Beleuchtungselement (100) mit Ausschnitten (112) versehen ist, die in der Befestigungsfläche (110) der Leuchtdiodenleiste (108) ausgebildet sind, sodass die Leuchtdioden in die Innenseite (104) des Körpers (102) ausgerichtet sind, wenn die Dioden in die Ausschnitte eingesetzt sind und die Leuchtdiodenleiste (108) befestigt ist.

2. Beleuchtungselement (100) nach Anspruch 1, wobei das Profil (10) eine Haube bildet, die angepasst ist, um an einem Gepäckträgermodul (12) befestigt zu sein.

3. Beleuchtungselement (100) nach einem der Ansprüche 1 oder 2, umfassend eine Vielzahl von Befestigungsclips (114) der Leuchtdiodenleiste (108).

4. Schienenfahrzeug, umfassend ein Beleuchtungselement (100) nach einem der vorherigen Ansprüche.

5. Schienenfahrzeug nach Anspruch 4, umfassend ein Gepäckträgermodul (12), wobei das Profil (10) an dem Gepäckträgermodul (12) befestigt ist, wobei das Profil (10) um eine Achse (X) des Gepäckträgermoduls (12) zwischen einer ersten Endposition, die als Betriebsposition bezeichnet wird, und einer zweiten Endposition, die als Wartungsposition bezeichnet wird, drehbar beweglich ist, und wobei der Winkel (X), der durch den Längsrand (18) des Profils (10) gegenüber dem Längsrand (19), der die thermoplastische Elastomerbeschichtung (16) umfasst, zwischen der Betriebsposition des Profils (10) und seiner Wartungsposition gebildet ist, größer als oder gleich wie 95° ist.

## Claims

1. Lighting element (100) comprising a section (10) for the interior fittings of a rail vehicle, the section (10) being produced by co-extrusion in a single piece and comprising:
- a rigid substrate (14) extending in a longitudinal direction (L) and having two opposite longitudinal edges (18, 19), said rigid substrate (14) being made of polycarbonate and comprising at least a first opaque part (26) and at least a second transparent or translucent part (28, 30), each first (26) and second part (28, 30) extending in the longitudinal direction (L), and
- a thermoplastic elastomer coating (16) extruded together with the rigid substrate (14) onto at least part of one of the longitudinal edges (19) of said rigid substrate (14), the lighting element (100) comprising a body (102) formed by the rigid substrate (14) having a tubular shape in the longitudinal direction (L) defining an interior (104) of the body (102) and an exterior (106) of the body (102), the rigid substrate (14) delimiting a surface (110) for fixing an array of light-emitting diodes strip(108), this attachment surface (110) being located on the outside (106) of the body (102) of the lighting element (100),
the lighting element (100) being provided with cutouts (112) in the fastening surface (110) of the light-emitting diode strip (108) so that the light-emitting diodes are directed towards the inside (104) of the body (102) when the diodes are inserted into the cutouts and the light-emitting diode strip (108) is fixed.

2. Lighting element (100) according to claim 1, in which the profile (10) forms a cover adapted to be fixed to a luggage rack module (12).

3. Lighting element (100) according to any one of claims 1 or 2, comprising a plurality of clips (114) for fixing the light-emitting diode strip (108).

4. Railway vehicle comprising a lighting element (100) according to any one of the preceding claims.

5. Railway vehicle according to claim 4 comprising a luggage rack module (12), the profile (10) being fixed to the luggage rack module (12), the profile (10) being able to rotate about an axis (X) of the luggage rack module (12) between a first extreme position known as the operating position and a second extreme position known as the maintenance position, and in which the angle (X) formed by the longitudinal edge (18) of the section (10) opposite the longitudinal edge (19) comprising the thermoplastic elastomer coating (16) between the operating position of the section (10) and its maintenance position is greater than or equal to 95°.
